# EUROPÄISCHE PATENTSCHRIFT

(11) **EP 1 394 877 B1**
(45) Veröffentlichungstag und Bekanntmachung des Hinweises auf die Patenterteilung: **12.12.2012**
(21) Anmeldenummer: 02016923.1
(22) Anmeldetag: 31.07.2002
(51) Int. Cl.: H01M 8/02

(54) **Plattenelemente für Brennstoffzellenstacks**
Plate element for fuel cell stacks
Element conçu sous forme de plaques pour piles à combustible

(43) Veröffentlichungstag der Anmeldung: 03.03.2004
(73) Patentinhaber: SFC Energy AG, 85649 Brunnthal (DE)
(72) Erfinder: Huber, Markus, 76137 Karlsruhe (DE); Ruf, Christian, 80636 München (DE)
(74) Vertreter: Grünecker, Kinkeldey, Stockmair & Schwanhäusser

(56) Entgegenhaltungen:
- EP-A- 0 281 949
- EP-A- 0 959 511
- EP-A- 0 975 039
- EP-A- 1 220 347
- WO-A-97/23006
- WO-A1-98/13891
- DE-A1- 10 040 654
- US-A- 3 134 696
- US-A- 5 863 671

## Beschreibung

Die Erfindung betrifft Plattenelemente für Brennstoffzellenstacks in monopolarer Anordnung. Speziell betrifft die Erfindung fluidführende Stromableiter und Elemente zum Einbau zwischen den Stromableitern, um diese elektrisch zu isolieren.

### Stand der Technik

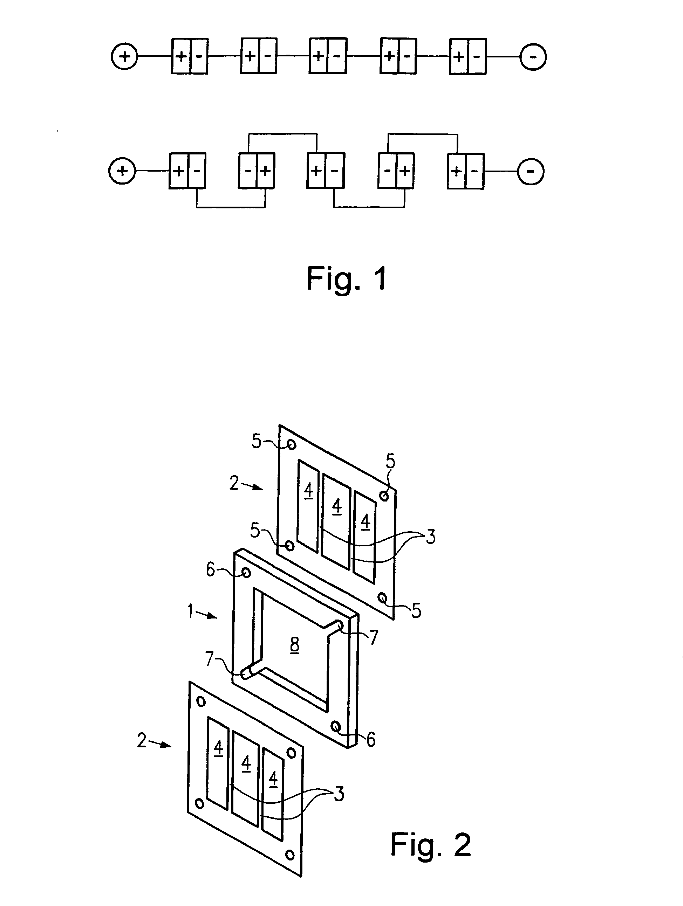

Die Unterschiede zwischen einer Bipolaranordnung und einer Monopolaranordnung lassen sich am einfachsten anhand von schematischen Ersatzschaltbildern aufzeigen, die in Fig. 1 skizziert sind.

Der Bipolaranordnung entspricht dabei die obere Teilfigur, die eine Reihenschaltung von einzelnen Spannungszellen darstellt. Zellen sind dabei so benachbart, dass sich jeweils ein Pluspol und ein Minuspol gegenüberliegen, was eine einfache Verschaltung der Spannungszellen erlaubt. Nach diesem Anordnungsschema sind beispielsweise die Kammern eines Bleiakkumulators angeordnet, werden Batterien in eine Stablampe eingesetzt, oder werden Brennstoffzelleneinheiten in einem Bipolarstack angeordnet.

Der Monopolaranordnung entspricht die untere Darstellung der Figur. Bei dieser Anordnung sind die Zellen so benachbart, dass sich paarweise jeweils zwei Pluspole oder zwei Minuspole gegenüberliegen. Um hier die einzelnen Spannungszellen in Reihe zu schalten, ist eine vergleichsweise umständliche Verschaltung notwendig, so dass eine solche Anordnung von Einzelzellen in den meisten Anwendungen keinerlei Vorteile gegenüber der bipolaren Anordnung aufweisen würde. Diese gilt aber nicht für Brennstoffzellenstacks: hier können mit einer monopolaren Anordnung auch Vorteile erzielt werden, wie unten unter Bezugnahme auf Figur 2 erläutert werden soll.

Innerhalb eines Bipolarstacks hat jede Kathode zwei benachbarte Anoden und muss gegenüber diesen gegen Fluidübertritte abgedichtet sein. Innerhalb einer Zelle erfolgt dies im Zusammenwirken von Elektrolytmaterial (im Innenbereich) und Dichtungen (im Außenbereich). Die Separierung zwischen den benachbarten Zellen erfolgt jeweils durch eine Trennplatte, deren eine Seite die Kathodenkammer und deren andere Seite die Anodenkammer bildet. Auch die Fluiddurchführungen der Trennplatten sind so ausgebildet, dass das Kathodenfluid der einen Seite (Kathodenseite) nicht mit dem Anodenfluid der anderen Seite (Anodenseite) in Berührung kommt. EP-A-1 220 347 offenbart ein Plattenelement für ein Bipolarstack mit den Merkmalen gemäß der Präambel von Anspruch 1.

Bei einer monopolaren Anordnung bilden sich dagegen Anoden- und Kathodenpaare. Zwar müssen die Kathoden und Anoden innerhalb eines solchen Paars elektrisch gegeneinander isoliert sein, die Fluidbereiche selbst müssen aber nicht getrennt sein, solange die elektrische Leitfähigkeit der Kathoden- und Anodenfluide vernachlässigbar bleibt (was trotz einer gewissen Leitfähigkeit, insbesondere des Anodenfluids, in der Regel der Fall ist). Zwei Kathoden können also jeweils zu einer Kathodenkammer zusammengefasst werden, und zwei Anoden jeweils zu einer Anodenkammer.

Fig. 2 zeigt eine solche Anodenkammer in einer Explosionsdarstellung. Ein solcher Aufbau ist beispielsweise in der DE 100 40 654 A1 beschrieben. Ein elektrisch isolierendes Rahmenelement 1 ist sandwich-artig zwischen zwei Stromabnehmern 2 angeordnet. Die Stromabnehmer wiederum grenzen an (in der Figur nicht abgebildete) Elektrolyteinrichtungen (MEA). Die Stromabnehmer 2 dienen der Stromabfuhr an der Grenzfläche MEA-Stromabnehmer, sollen aber gleichzeitig Kontaktfläche des Anodenfluids mit der MEA nicht nennenswert verringern: daher wird der Innenbereich eines Stromabnehmers 2 mit dünnen Querstegen 3 überbrückt, die für eine Stromabfuhr ausreichend breit und zahlreich sind, dabei aber so schmal sind, dass die durch die Aussparungen 4 definierte aktive Kontaktfläche des Fluids mit der MEA nicht substantiell verringert wird.

Zur Strömungsführung entlang der Stapelachse sind im Rahmenbereich (hier in den Ecken) der Stromableiter vier Bohrungen 5 vorgesehen, wobei jeweils zwei diametral gegenüberliegende Bohrungen der Führung des Anodenfluids bzw. des Kathodenfluids dienen. Entsprechende Bohrungen 6, 7 sind auch im Rahmenelement 1 vorgesehen. Die Bohrungen 7 stehen über Durchbrüche mit dem Innenbereich 8 des Rahmenelements 1 in Verbindung. Die Zufuhr von Anodenfluid in den Innenbereich 8 erfolgt über eine der beiden Bohrungen 7, die Abfuhr durch die andere, diametral gegenüberliegende Bohrung 7. Der Innenbereich 8 stellt das Hauptvolumen der Anodenkammer der gezeigten Zelle dar, da die Dicke des Rahmenelements 1 deutlich höher ist als die der Stromabnehmer 2.

Die hier für die Anodenkammer gemachten Aussagen gelten entsprechend auch für die Kathodenkammer. Bei einer Kathodenkammer hat das zentrale Rahmenelement Aussparungen an den beiden anderen diametralen Fluiddurchführungen. Hierzu muss der skizzierte Typ von Rahmenelementen 1 nur verdreht werden, so dass nur ein Typ von Rahmenelementen zum Aufbau des Stacks erforderlich ist.

Bei der gezeigten Anordnung werden die Eckbereiche, die keinen Einlass bzw. Auslass aufweisen, weit weniger stark durchströmt als etwa der zentrale Bereich der Anodenkammer. Um innerhalb der Kammern eine gleichförmigere Strömungsverteilung zu erreichen, können in den Anoden- und Kathodenkammern (in der Figur nicht abgebildete) netzartige Einsätze vorgesehen werden. Aber auch hiermit ist der Fluidaustausch in den Staubereichen der Anoden- und Kathodenkammem geringer als entlang der Strecke Einlass-Auslass, so dass die zur Verfügung stehende aktive Fläche nicht optimal genutzt werden kann. Solche Staubereiche bilden sich insbesondere allem bei einer ungünstigen räumlichen Positionierung des Stacks.

### Beschreibung der Erfindung

Angesichts dieser Mängel ist es eine Aufgabe der vorliegenden Erfindung, verbesserte Stackelemente in Monopolaranordnung bereitzustellen, mit denen die oben beschriebenen Nachteile überwunden werden.

Diese Aufgabe wird durch das erfindungsgemäße Plattenelement mit den Merkmalen des Anspruchs 1 und die Brennstoffzellenstackbaueinheit mit den Merkmalen des Anspruchs 11 gelöst.

Vorteilhafte Weiterbildungen sind in den Unteransprüchen angegeben. Besonders bevorzugte Ausführungsformen werden unter Bezugnahme auf die beigefügten Figuren beschrieben.

Das erfindungsgemäße Plattenelement für einen Brennstoffzellenstapel umfasst einen Rahmenbereich und wenigstens einen Innenbereich, der von dem Rahmenbereich umgeben ist, eine Mehrzahl von Stegen, die sich vom Rahmenbereich in den wenigstens einen Innenbereich erstrecken und im wenigstens einen Innenbereich eine Strömungsführungsstruktur definieren wenigstens vier Bohrungen im Rahmenbereich, von denen wenigstens zwei mit dem Strömungsfeld in Verbindung stehen.

Der Begriff "Plattenelement" soll anzeigen, dass der beanspruchte Gegenstand in einer Raumrichtung deutlich kleinere Abmessungen als in den zwei dazu senkrechten Raumrichtungen aufweist. In der einen Raumrichtung kann die Dicke des Plattenelements sogar so klein sein, dass das Plattenelement keine Eigenstabilität aufweist. Das erfindungsgemäße Plattenelement soll also auch Folien umfassen, die entsprechend den oben angegebenen Merkmalen strukturiert sind.

Unter Strömungsführungsstruktur sind Aussparungen zwischen den Stegen oder wenigstens eine zusammenhängende Struktur von Aussparungen zwischen den Stegen zu verstehen, die einen Kanal oder eine Mehrzahl von Kanälen im Innenbereich des Plattenelements definieren. Jeder Kanal ist (beispielsweise über Durchbrüche durch den Rahmenbereich) mit zwei Bohrungen verbunden, von denen die eine der Fluidzufuhr, die andere der Fluidabfuhr dient. Durch diesen wenigstens einen Kanal ist die Strömungsführungsstruktur ist zum Führen (Kanalisieren) einer Fluidströmung in der Plattenebene geeignet. Zur tatsächlichen Aufnahme eines Fluids und Führung der Strömung benötigt die Strömungsführungsstruktur natürlich noch seitliche Begrenzungen, die durch anliegende plane Oberflächen angrenzender Stackelemente (beispielsweise denen von Membran-Elektroden-Einheiten) bereit gestellt werden.

Zur Ausbildung mehrerer unabhängiger Kanäle können die Stege beidseitig mit dem Rahmenbereich verbunden sein. Die Stege können aber auch nur einseitig mit dem Rahmenbereich verbunden sein. Sie haben im einfachsten Fall eine gerade Zungenform und erstrecken sich in einer verzahnten Anordnung alternierend von gegenüberliegenden Seiten des Rahmenbereichs in den Innenbereich des Plattenelements. Anstelle von geraden Zungen können auch komplexere Stegformen Verwendung finden, wie beispielsweise Stege in "T"-Form oder"L"-Form, die ebenfalls zur Ausbildung eines Strömungsfeldes alternierend anordenbar sind.

Das Plattenelement ist vorteilhafterweise so ausgebildet, dass es in unterschiedlichen Orientierungen an unterschiedlichen Positionen des Brennstoffzellenstacks eingebaut werden kann. Die Rahmenform ist daher bevorzugt quadratisch oder rechteckig. Denkbar sind aber auch andere Formen, die unter Drehung um weniger als 360° deckungsgleich in sich selbst übergehen, also insbesondere die Formen eines gleichseitigen Dreiecks oder anderer regelmäßiger Vielecke, aber auch eine Kreisform oder eine elliptische Form.

Die Strömungsführungsstruktur kann auch innerhalb eines Innenbereichs eine Vielzahl nebeneinander (beispielsweise parallel) verlaufender Kanäle sein. Vorzugsweise aber wird die Strömungsführungsstruktur in einem vom Rahmenbereich umgebenen Innenbereich durch einen mäandernden Strömungskanal gebildet, oder entsprechend bei mehreren Innenbreichen durch eine Mehrzahl solcher mäandemder Strömungskanäle. In diesem Fall lässt sich bei einfachst möglicher Fluidzufuhr und Fluidabfuhr der (mit Ausnahme der Stege) gesamte Innenbereich gleichmäßig mit Fluiden versorgen.

Durch die strömungsführenden Eigenschaften der erfindungsgemäßen Plattenelemente ist ein lageunabhängiger Betrieb ohne Leistungseinbußen möglich, während bei der in Fig. 2 skizzierten Anordnung, bei der die Strömung nicht geführt wird, die Fluidabfuhr aus abgelegenen Kathoden- oder Anodenbereichen nur mit Hilfe der Schwerkraft zufriedenstellend erfolgt. Bei Verwendung als Direkt-Methanol-Brennstoffzelle (DMFC) kann sich z.B. in ungünstigen Betriebslagen kathodenseitig Wasser ansammeln und dadurch verhindern, dass sich der für die Reaktion benötigte Sauerstoff auf die gesamte aktive Fläche verteilen kann. Zum anderen kann das auf der Anode produzierte gasförmige CO₂ ebenso zur Blockierung der aktiven Fläche der Anode führen, wenn das Gas nicht schnell nach oben entweichen kann.

In einer bevorzugten Ausführung besteht das Plattenelement aus einem leitfähigen Material, beispielsweise aus Graphit, aber besonders bevorzugt aus einem Metall oder einer metallischen Verbindung. In dieser Ausführung kann das Plattenelement als Stromableiter einer Zelleneinheit verwendet werden. Metalle oder metallische Verbindungen sind bevorzugt, da sie i.d.R. preisgünstiger, leichter zu bearbeiten und mechanisch stabiler sind, und eine höhere elektrische Leitfähigkeit besitzen als nichtmetallisch Materialien. Auch lassen sich metallische Stromableiter leichter elektrisch kontaktieren.

In einer weiteren bevorzugten Ausführung besteht das Plattenelement aus einem isolierenden Material. In dieser Ausführung kann das Plattenelement zur elektrischen Isolierung benachbarter Stromableiter in Monopolaranordnungen verwendet werden.

In einer vorteilhaften Weiterbildung ist das erfindungsgemäße Plattenelement als ein Laminat aus einer leitfähigen Schicht und einer isolierenden Schicht ausgebildet. Bei der Verwendung solcher Laminate lässt sich der Aufbau des Brennstoffzellenstacks vereinfachen, da keine separaten Isoliereinheiten mehr verwendet werden müssen. Die Schichtdicken der leitfähigen Schicht und einer isolierenden Schicht können die gleiche Größenordnung aufweisen. Das Laminat kann aber auch ein metallisch beschichteter Isolator oder ein isolierend beschichtetes Metall sein, bei denen die Dicke der Beschichtung deutlich kleiner als die Gesamtdicke ist.

Der Aufbau monopolarer Brennstoffzellenstacks lässt sich weiter vereinfachen, wenn das Plattenelement als Laminat aus einer isolierenden Schicht und zwei leitfähigen Schichten ausgebildet ist, die die isolierende Schicht sandwichartig einbetten. Auch hier unterliegen die jeweiligen Schichtdicken a priori keinen Einschränkungen. Bei Verwendung dieser Weiterbildung werden zum Aufbau des Stacks einfach Elektrolyteinheiten und Plattenelemente alternierend gestapelt.

In einer besonders bevorzugten Weiterbildung weist das Plattenelement wenigstens eine Rippe auf, die sich vom Rahmenbereich nach außen erstreckt. Über diese wenigstens eine Rippe können Stromableiter in einem monopolaren oder bipolaren leichter miteinander elektrisch Verbunden werden. Beim isolierenden Plattenelement werden zwar keine solche Rippen benötigt, sie können aber produktionsbedingt auftreten, wenn dieselbe Vorrichtung wie zum Herstellen der Stromableiter verwendet wird, und sind i.A. nicht störend.

In einer die elektrische Verschaltung besonders vereinfachenden Weiterbildung sind Rippen an wenigstens zwei gegenüberliegenden Seiten des Rahmenbereichs vorgesehen. In diesem Fall kein ein Typ von Stromableiter in verschiedenen Orientierungen problemlos verschaltet werden.

Speziell für Monopolaranordnungen ist eine Weiterbildung des Plattenelements vorteilhaft, bei dem die Rippen an gegenüberliegenden Seiten des Rahmenbereichs versetzt zueinander angeordnet sind. Dadurch können die Stromableiter so eingebaut werden, dass seine Rippen bzgl. der Rippen der beiden jeweils benachbarten Stromableiter versetzt sind und so bei der Kontaktierung mit einem der übernächsten Stromableiter nicht hinderlich sind.

Die erfindungsgemäße Brennstoffzellenstackbaueinheit umfasst eine Membran-Elektroden-Einheit (MEA), die wenigstens an einer Seite mit der leitfähigen Seite eines als Stromableiters ausgeführten Plattenelements verbunden ist. Durch die Verbindung hat die Brennstoffzellenstackbaueinheit eine höhere mechanische Stabilität als die Einzelelemente, so dass der Aufbau des Stacks erleichtert wird. Femer kann bei der Vorfertigung der Brennstoffzellenstackbaueinheit unter Umständen ein besserer elektrischer Kontakt zwischen Elektrolyteinrichtung und Stromableiter erreicht werden, als dies beim einfachen Aneinanderlegen von stromableitenden Plattenelementen und Elektrolyteinrichtung möglich ist.

Nachfolgend wird die Erfindung anhand besonders bevorzugter Ausbildungsformen und unter Bezugnahme auf die beigefügten Figuren beschrieben.

Es zeigen:
- Fig. 1: den qualitativen Unterschied zwischen einer bipolaren und einer monopolaren Anordnung;
- Fig. 2: Ausbildung einer Fluidkammer für eine Monopolaranordnung gemäß dem Stand der Technik;
- Fig. 3: ein Plattenelement gemäß der vorliegenden Erfindung;
- Fig. 4: eine Bipolaranordnung unter Verwendung von Plattenelementen;
- Fig. 5: eine Monopolaranordnung unter Verwendung von erfindungsgemäßen Plattenelementen;
- Fig. 6: eine weitere Monopolaranordnung unter Verwendung von erfindungsgemäßen Plattenelementen.
- Fig. 7: zeigt ein Beispiel eines nicht zur Erfindung gehörenden Plattenelements als Stromabführeinrichtung in einem Bipolarstack;
- Fig. 8: zeigt eine fluid-isolierende Zwischenplatte für die in Fig. 7 gezeigten Stromabführeinrichtung.

Die Figuren 1 und 2 wurden bereits einleitend beschrieben.

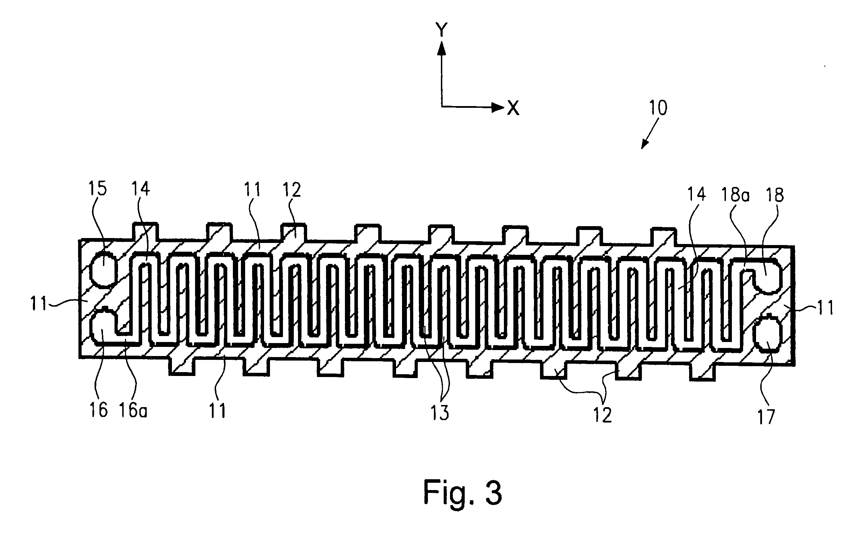

Fig. 3 zeigt eine bevorzugte Ausführungsform des erfindungsgemäßen Plattenelements 10.

Das Plattenelement 10 kann aus einem elektrisch leitfähigen Material (i.d.R. Metall) hergestellt sein und in dieser Ausbildung als Stromabnehmer für bipolare oder monopolare Brennstoffzellzellenstacks verwendet werden.

Es weist einen umlaufenden Rahmenbereich 11 auf, wobei sich von zwei gegenüberliegenden Seiten des Rahmenbereichs 11 nach außen Rippen 12 und nach innen Stege 13 erstrecken. Die Stege 13 erstrecken sich nicht bis zur gegenüberliegenden Rahmenseite und sind alternierend angeordnet, so dass durch die Aussparungen zwischen den Stegen 13 ein mäanderförmiger Kanal 14 definiert wird. Im Rahmenbereich 11 sind ferner vier Bohrungen 15, 16, 17, 18 vorgesehen, von denen zwei diametral gegenüberliegende Bohrungen 16 und 18 über Durchbrüche 16a und 18a mit dem mäanderförmigen Kanal 14 verbunden sind.

Beim Einbau in einen Stack sind ein Teil des Rahmenbereichs 11 und die Stege 13 in elektrischem Kontakt mit der MEA und dienen zur Stromleitung. Gleichzeitig dienen die Stege 13 auch zur gleichmäßigen Fluidverteilung über die aktive Fläche und der Fluidführung über diese Fläche. Das Fluid wird über eine der beiden Bohrungen 16, 18, die über die Durchbrüche mit dem mäanderförmigen Kanal 14 verbunden sind, zugeführt, durchströmt diesen Kanal 14, und wird über die andere Bohrung wieder abgeführt. Aufgrund der geführten Strömung gibt es keine Staubereiche mit verringertem Fluidaustausch, so dass ein höherer Wirkungsgrad erzielt wird. Femer gewährleistet die Strömungsführung eine Lageabhängigkeit beim Einsatz des Stacks.

In einer für Monopolaranordnungen bevorzugten Ausführungsform sind die sich nach außen erstreckenden Rippen der einen Seite gegenüber den Rippen der anderen Seite so versetzt, dass beim Aneinanderlegen des gezeigten Plattenelements 10 und eines weiteren Plattenelements 10, das um 180° bzgl. der in der Figur angedeuteten x- oder y- Achse gedreht und so positioniert wird, dass die Bohrungen der beiden Plattenelemente fluchten, die Rippen der beiden Plattenelemente nicht miteinander in Berührung kommen.

Für Monopolaranordnungen ist es ferner bevorzugt, dass bei einer Rotation des Plattenelements 10 um 180° in der Papierebene, bei der die Bohrung 17 in die Bohrung 15 übergeht (und umgekehrt) und die Bohrung 18 in die Bohrung 16 übergeht (und umgekehrt), die sich nach außen erstreckenden Rippen der einen Seite nicht mit der ursprünglichen Lage der Rippen der anderen Seite in Deckung übergehen, sondern ebenfalls zwischen diesen in Position kommen. Dies erlaubt es, nur einen Typ von Stromableiter zum Aufbau des gesamten Monopolarstacks zu verwenden.

Der abgebildete Stromableiter kann beispielsweise aus einer Metallplatte oder einem Blech gestanzt werden und ist somit preisgünstig herstellbar.

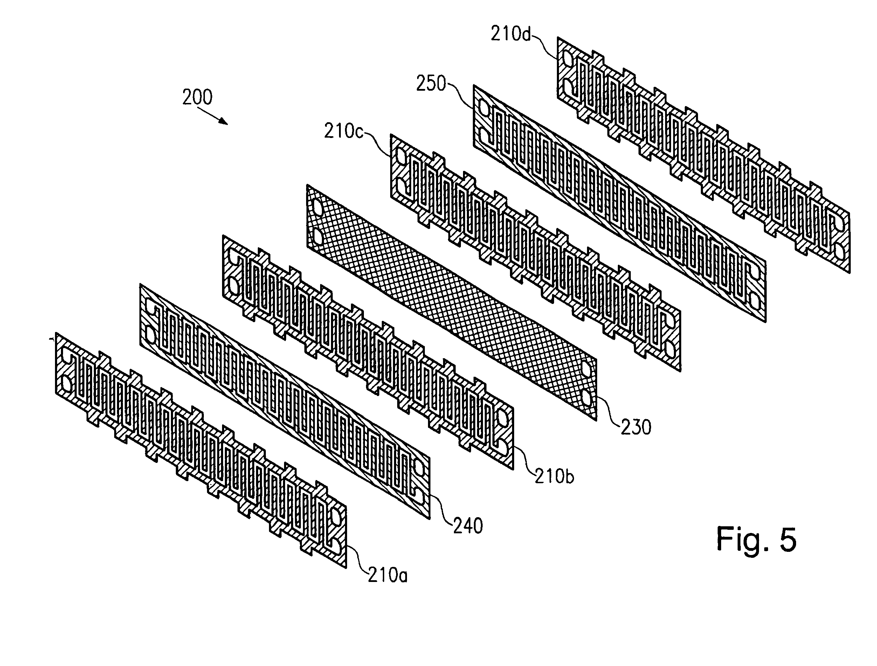

Elektrisch isolierende Zwischenplatten für Monopolaranordnungen haben im Hinblick auf die Bohrungen und das Strömungsfeld die gleiche Struktur wie der in Fig. 3 gezeigte Stromableiter. Die sich nach außen erstreckenden Rippen der Stromableiter sind bei den isolierenden Zwischenplatten nicht erforderlich (siehe Fig. 5). Es sei aber auch darauf hingewiesen, dass diese Rippen bei den isolierenden Zwischenplatten nicht hinderlich wären, so dass gegebenenfalls ein und dieselbe Vorrichtung zum Herstellen der Stromableiter und der isolierenden Zwischenplatten verwendet werden kann.

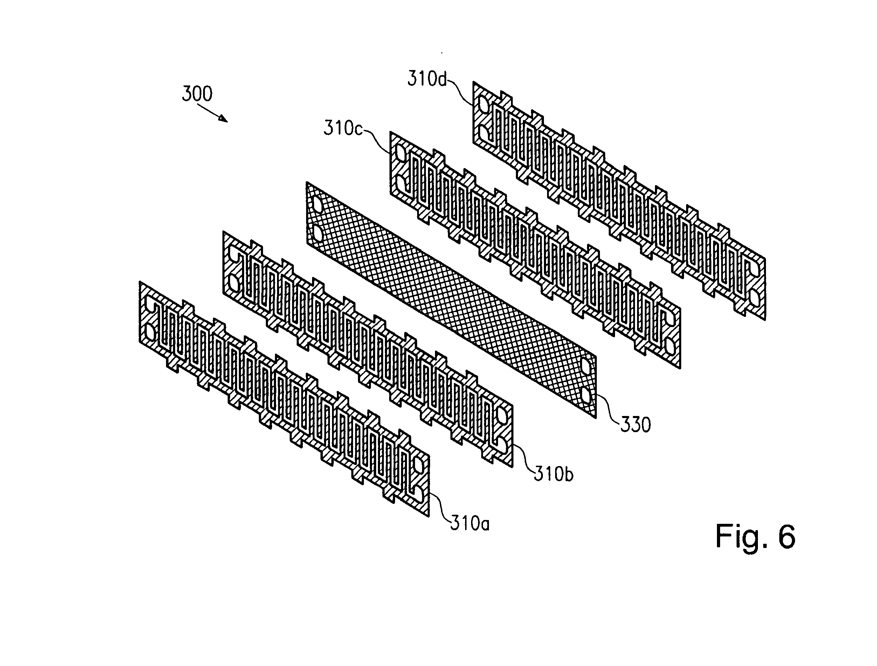

Alternativ zur isolierenden Zwischenplatte können zusätzlich zu den reinen Metallplatten auch einseitig mit einem isolierenden Material beschichtete Metallplatten (oder mit einem Metall beschichtete isolierende Kunststoffplatten) verwendet werden, die wie in Fig. 3 gezeigt strukturiert werden. In diesen Fällen müssen keine separaten Dichtungen zur gegenseitigen Isolation aneinanderliegender Stromableiter hergestellt werden, was die Herstellungskosten weiter senkt, die Montage vereinfacht und das Volumen des Stacks weiter reduziert (näheres hierzu bei der Beschreibung von Fig. 6).

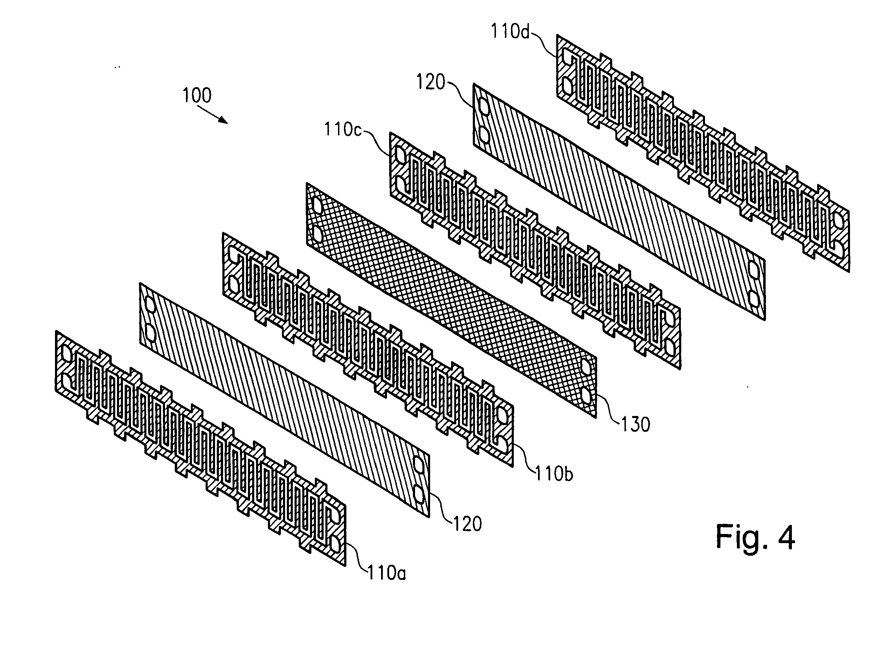

Fig. 4 zeigt - in Explosionsdarstellung und ausschnittsweise - einen beispielhaften Brennstoffzellenstack in Bipolaranordnung 100 mit den Stromableitern von Fig. 3.

Von den vier Stromableitern 110a, 110b, 110c, 110d sind die Stromableiter 110a und 110c auf der einen Seite, sowie die Stromableiter 110b und 110d auf der anderen Seite identisch ausgerichtet. Nimmt man ohne Einschränkung der Allgemeinheit den Stromableiter 110a als kathodenseitigen Stromableiter an, so ist der Stromableiter 110b ein anodenseitiger Stromableiter, der Stromableiter 110c ein kathodenseitiger Stromableiter, und der Stromableiter 110d wiederum ein anodenseitiger Stromableiter. Die Stromableiter sind voneinander durch Zwischenplatten 120 oder durch Elektrolyteinrichtungen (MEA) 130 getrennt. Die Anordnung 120-110b-130 definiert den Anodenbereich einer Zelleineinheit, während die Anordnung 130-110c-120 den Kathodenbereich dieser Zelleineinheit bildet.

Die Zwischenplatten 120 dienen zur Abtrennung benachbarter Fluidkammem, d.h. der Abtrennung von Kathoden- und Anodenbereichen. Sie müssen eine Vermischung von Kathoden- und Anodenfluiden verhindern, müssen allerdings nicht elektrisch isolierend sein, so dass sie also beispielweise auch aus einer dünnen Metallfolie bestehen können.

Wie schon erwähnt, bildet die Anordnung 120-110b-130-110c-120 eine Zelleneinheit oder - in Analogie zur Fig. 1 - ein Spannungselement. Zur Verschaltung des gezeigten Stackabschnitts werden - in Analogie zur oberen Teilfigur von Fig. 1-jeweils paarweise die Stromabnehmer 110a und 110b, sowie die Stromabnehmer 110c und 110d über die zu diesem Zweck vorgesehenen Rippen miteinander kontaktiert. Die unmittelbar benachbarten Stromabnehmer verschiedener Zelleneinheiten sind hier also vorzugsweise so anzuordnen, dass diese Rippen miteinander fluchten.

Fig. 5 zeigt - in Explosionsdarstellung und ausschnittsweise - einen Brennstoffzellenstack in Monopolaranordnung 200 mit den Stromableitern von Fig. 3.

Ähnlich wie bei Fig. 4 sind auch hier wieder vier Stromableiter 210a, 210b, 210c, 210d skizziert. Nimmt man ohne Einschränkung der Allgemeinheit die Stromableiter 210a und 210b als anodenseitige Stromableiter an, so stellen die Stromableiter 210c und 210d kathodenseitige Stromableiter dar.

Die Stromableiter 210b und 210c sind voneinander durch eine Elektrolyt/Elektroden-Einrichtung, beispielsweise eine Membran-Elektroden-Einheit (MEA) 230 getrennt. Die Anordnung 240-210b-230 definiert den Anodenbereich einer Zelleineinheit, während die Anordnung 230-210c-250 den Kathodenbereich dieser Zelleineinheit bildet.

Die Zwischenplatten 240 bzw. 250 dienen zur gegenseitigen elektrischen Isolierung der Stromableiter 210a und 210b bzw. 210c und 210d. Daher müssen die Stege der Zwischenplatten 240 und 250 exakt mit denen der angrenzenden Stromableiter ausgerichtet sein. Paarweise aneinander grenzende Anodenbereiche bzw. Kathodenbereiche bilden jeweils eine gemeinsame Anodenkammer bzw. Kathodenkammer, die zu beiden Seiten jeweils durch eine Elektrolyteinrichtung 230 abgeschlossen werden.

Die Anordnung 240-210b-230-210c-250 bildet eine Zelleneinheit oder- in Analogie zur Fig. 1 - ein Spannungselement. Die Verschaltung erfolgt analog zur unteren Teilfigur von Fig. 1: Zur Verschaltung des gezeigten Stackabschnitts werden beispielsweise der anodenseitige Stromabnehmer 210b und der kathodenseitige Stromabnehmer 210d der nachfolgenden Zelleneinheit miteinander über die fluchtend ausgerichteten Rippen elektrisch verbunden (kontaktiert). Der anodenseitige Stromabnehmer 210a wird mit dem nächsten linksseitigen kathodenseitigen Stromabnehmer (nicht abgebildet) kontaktiert, während der kathodenseitige Stromabnehmer 210d mit dem nächsten rechtsseitigen anodenseitigen Stromabnehmer (nicht abgebildet) kontaktiert wird, usw. Diese paarweise Kontaktierung kann dadurch vereinfacht werden, dass die miteinander zu verbindenden Rippen fluchtend ausgerichtet sind. Die Stromabnehmerelemente sind also vorzugsweise so ausgebildet, dass die Anschlussrippen jedes Stromabnehmers mit denen der übernächsten Stromabnehmer fluchten, während die Anschlussrippen unmittelbar benachbarter Stromabnehmer versetzt sind (nicht miteinander fluchten). Wie in den Figuren 3 und 5 veranschaulicht, kann dies durch geeignete Ausbildung mit einem einzigen Typ von Stromabnehmer erreicht werden, der jeweils in anderer Orientierung eingesetzt wird.

Wie die in Anlehnung an Fig. 5 ausgeführte Fig. 6 veranschaulicht, lässt sich ein vereinfachter Aufbau eines Monopolarstacks erreichen, wenn Stromableiter verwendet werden, die als Laminat ausgebildet sind, wobei eine Seite leitfähig und die andere Seite isolierend ist.

Beispielsweise kann der in Fig. 3 gezeigte Stromableiter auf einer Seite mit einem isolierenden Material beschicht werden. In Fig. 6 sollen die dem Betrachter zugewandten Seiten der Stromableiter 310b und 310d eine solche Beschichtung aufweisen. Durch eine alternierende Anordnung solcher beschichteter Stromableiter mit unbeschichteten Stromableitern, bei der die beschichtete Seite jeweils den angrenzenden unbeschichteten Stromableitern zugewandt ist, lässt sich ein Monopolarstack ohne Verwendung von separaten isolierenden Zwischenplatten aufbauen, was konstruktionstechnisch eine nicht unerhebliche Vereinfachung darstellt. Femer kann die isolierende Beschichtung eine geringere Dicke als die als separate Einheiten hergestellten isolierenden Zwischenplatten aufweisen, so dass das Gesamtvolumen des Stacks verringert werden kann.

Es sei darauf hingewiesen, dass zusätzlich auch die dem Betrachter abgewandten Seiten der Stromableiter 310a und 310c eine solche isolierende Beschichtung aufweisen können, auch wenn dies grundsätzlich nicht erforderlich ist. Neben einer noch besseren Gewährleistung einer elektrischen Isolation benachbarter Zelleinheiten kann dies auch das Zusammensetzen des Stacks vereinfachen: benachbarte Stromableiter müssen dann immer so zusammengesetzt werden, dass die Fluidströmungseinrichtungen (Bohrungen, Durchbrüche, Kanäle) deckungsgleich sind und die isolierenden Schichten unmittelbar aneinander liegen.

Prinzipiell gibt es keine Vorbedingungen hinsichtlich der Dicke des isolierenden Teils und des leitfähigen Teils eines solchen Laminats. Soweit keine anderen Gründe (z.B. mechanische Stabilität, elektrische Leitfähigkeit) dagegen sprechen, kann also ein derartiger Stromableiter genau so gut im wesentlichen aus isolierendem Material bestehen, das auf einer Seite mit einer leitfähigen Schicht beschichtet ist.

Eine noch weitergehende Vereinfachung des Aufbaus eines Monopolarstacks kann durch Laminate erreicht werden, die aus einer zwischen zwei leitfähigen Schichten (z.B. Metallschichten) eingebettete isolierende Schicht aufweisen, also beispielsweise die Plattenelemente 210a, 240, 210b von Fig. 4 in ein Plattenelement integrieren. Der Stack kann dann einfach als alternierende Anordnung aus Laminaten und Elektrolyteinrichtungen aufgebaut werden.

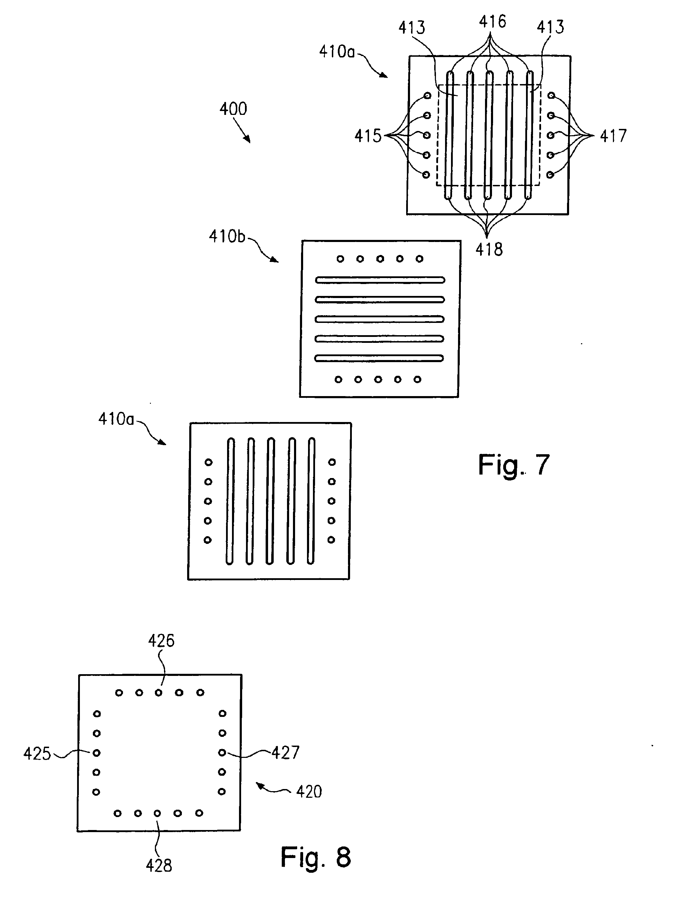

Fig. 7 zeigt einBeispiel eines nicht zur Erfindung gehörenden Plattenelements, sowie deren alternierende Anordnung beim Aufbau eines beispielhaften Bipolarstacks 400 (Elektrolyteinrichtungen und Zwischenlagen, die benachbarte Anoden- und Kathodenbereiche voneinander trennen, wurden der Einfachheit halber weggelassen). Die Plattenelemente 41 0 und 410b unterscheiden sich nur durch ihre Orientierung. Im Vergleich mit ähnlichen Strukturmerkmalen des Ausführungsform von Fig. 3 wurden hier um 400 erhöhte Bezugszeichen verwendet.

Die gestrichelte Linie des in der Figur recht oben skizzierten Plattenelements 410a unterteilt das Plattenelement in einen Rahmenbereich und einen Innenbereich.

Der Rahmenbereich weist eine Vielzahl von Bohrungen 415, 416, 417, 418 auf, von denen die Bohrungen 416 und 418 über Durchbrüche mit Aussparungen im Innenbereich des Plattenelements paarweise verbunden sind. Alle Bohrungen dienen der Fluidführung entlang der Stackachse (senkrecht zur Plattenebene). Die Bohrungen 416 und 418 dienen zusätzlich noch zur Fluidführung senkrecht zur Stackachse. Hierzu sind sie paarweise über Durchbrüche mit Aussparungen 414 im Innenbereich des Plattenelements verbunden, die eine Vielzahl von parallelen Kanälen definieren. Diese Kanäle 414 sind durch Stege 413 voneinander getrennt, die bei einem als Stromableiter dienenden Plattenelement (wie bei der Bipolaranordnung der Fall) zur Stromleitung dienen. Die Stege 413 sind hier mit gegenüberliegenden Rahmenbereichen verbunden. Zwischen jedem Paar von Plattenelementen wird entweder eine Elektrolyteinrichtung oder eine Trennplatte 420 eingebracht, die die in Fig. 8 skizzierte Form und Strukturierung haben. Die Bohrungen 425, 426, 427, 427 im äußeren Bereich der Trennplatte 420 (wie auch der nicht skizzierten Elektrolyteinrichtung) sind im Stack exakt mit den entsprechenden Bohrungen 415, 416, 417, 418 der Plattenelemente 410a, 410b ausgerichtet.

Im skizzierten Beispiel definieren beispielsweise die Plattenelemente 410a Anodenkammern, während das Plattenelemente 410b eine Kathodenkammer darstellt. Die Bohrungen 415 und 417 des oberen Plattenelements 410a dienen in diesem Fall zur Führung des Kathodenfluids, während die Bohrungen 416 und 418 der Führung des Anodenfluids und der Zufuhr des Anodenfluids in die durch den Innenbereich definierte Anodenkammer dienen.

Die erfindungsgemäßen Plattenelemente können aus einem elektrisch leitfähigen Material hergestellt sein und in dieser Ausbildung als Stromabnehmer für monopolare Brennstoffzellenstacks verwendet werden. Im Unterschied zur Fig. 7 sind in diesem Fall die Stromabnehmer jeweils paarweise gleich auszurichten und benachbarte Paare jeweils um 90° verdreht. Wenn alle Stromabnehmer (oder wenigstens jeweils ein Stromabnehmer jedes Paars) einseitig isolierend beschichtet sind, so ist eine der Fig. 6 entsprechende Monopolaranordnung möglich. Sind die Stromabnehmer beidseitig leitfähig, so werden zusätzlich elektrisch isolierende Plattenelemente mit der in Fig. 7 skizzierten Strukturierung benötigt, um einen Fig. 5 entsprechenden Aufbau einer Monopolaranordnung zu ermöglichen. Die Elektrolyteinrichtung für die Monopolaranordnung unterscheidet sich von der der Bipolaranordnung dagegen nicht (vgl. Fig. 8).

Die vorliegende Erfindung und ihre Vorteile wurden zuletzt anhand von bevorzugten Ausführungsbeispielen erläutert. Der Schutzbereich der vorliegenden Erfindung wird aber allein durch die nachfolgenden Patentansprüche definiert.

## Patentansprüche

1. Ein Plattenelement (10) für einen Brennstoffzellenstapel mit einer monopolaren Anordnung, umfassend:
einen Rahmenbereich (11) und wenigstens einen Innenbereich, der von dem Rahmenbereich (11) umgeben ist;
eine Mehrzahl von Stegen (13), die sich vom Rahmenbereich (11) in den wenigstens einen Innenbereich erstrecken und im wenigstens einen Innenbereich eine Strömungsführungsstruktur (14) definieren, die durch Aussparungen zwischen den Stegen (13) gebildet wird,
wenigstens vier Bohrungen (15, 16, 17, 18) im Rahmenbereich, von denen wenigstens zwei mit der Strömungsführungsstruktur (14) in Verbindung stehen;
**dadurch gekennzeichnet, dass**
die Aussparungen wenigstens einen Kanal zum Führen einer Fluidströmung in der Plattenebene umfassen, so dass Fluidbereiche innerhalb von Anodenpaaren des Brennstoffzellenstapels nicht getrennt sind und Fluidbereiche innerhalb von Kathodenpaaren des Brennstoffzellenstapels nicht getrennt sind, und
die Strömungsführungsstruktur (14) seitliche Begrenzungen aufweist, die durch anliegende plane Oberflächen angrenzender Stapelelemente bereit gestellt werden.

2. Ein Plattenelement gemäß Anspruch 1, in welchem die Strömungsführungsstruktur wenigstens einen mäandernden Strömungskanal umfasst.

3. Ein Plattenelement gemäß einem der Ansprüche 1 und 2, welches aus einem leitfähigen Material besteht.

4. Ein Plattenelement gemäß Anspruch 3, welches aus einem Metall oder einer metallischen Verbindung besteht.

5. Ein Plattenelement gemäß einem der Ansprüche 1 und 2, welches aus einem isolierenden Material besteht.

6. Ein Plattenelement gemäß einem der Ansprüche 1 und 2, welches als Laminat aus einer leitfähigen Schicht und einer isolierenden Schicht ausgebildet ist.

7. Ein Plattenelement gemäß einem der Ansprüche 1 und 2, welches als Laminat aus einer isolierenden Schicht und zwei leitfähigen Schichten ausgebildet ist, die die isolierende Schicht sandwichartig einbetten.

8. Ein Plattenelement gemäß einem der vorangegangenen Ansprüche, mit wenigstens einer Rippe, die sich vom Rahmenbereich nach außen erstreckt.

9. Ein Plattenelement gemäß Anspruch 8, mit Rippen an wenigstens zwei gegenüberliegenden Seiten des Rahmenbereichs.

10. Ein Plattenelement gemäß Anspruch 9, bei welchem die Rippen an gegenüberliegenden Seiten des Rahmenbereichs versetzt zueinander angeordnet sind.

11. Eine Brennstoffzellenstackbaueinheit, umfassend:
eine Membran-Elektroden-Einheit, die wenigstens an einer Seite mit der leitfähigen Seite eines Plattenelements gemäß einem der Ansprüche 1 bis 4 und 6 bis 10 verbunden ist.

## Claims

1. A plate element (10) for a fuel cell stack in a monopolar arrangement, comprising:
a frame region (11) and at least one inner region which is enclosed by the frame region (11),
a plurality of webs (13) which extend from the frame region (11) into the at least one inner region and define, in the at least one inner region, a flow guidance structure (14) which is formed by recesses between the webs (13),
at least four bore holes (15, 16, 17, 18) in the frame region, of which at least two (16, 18) are connected with the flow guidance structure (14);
**characterised in that**
the recesses comprise at least one channel for guiding a fluid flow in the plane of the plate, such that fluid regions within anode pairs of the fuel cell stack are not separated and fluid regions within cathode pairs of the fuel cell stack are not separated, and
the flow guidance structure (14) has side restrictions which are provided by adjacent level surfaces of the adjoining stack elements.

2. A plate element according to Claim 1 in which the flow guidance structure contains at least one meandering flow channel.

3. A plate element according to one of the Claims 1 and 2 which consists of a conductive material.

4. A plate element according to Claim 3 which consists of a metal or a metallic compound.

5. A plate element according to one of the Claims 1 and 2 which consists of an insulating material.

6. A plate element according to one of the Claims 1 and 2 which is made as a laminate of a conductive layer and an insulating layer.

7. A plate element according to one of the Claims 1 and 2 which is made as a laminate of an insulating layer and two conductive layers which embed the insulating layer as if in a sandwich.

8. A plate element according to one of the previous claims with at least one rib which extends from the frame region outwards.

9. A plate element according to Claim 8 with ribs on at least two opposite sides of the frame region.

10. A plate element according to Claim 9 in which the ribs are positioned offset to each other on opposite sides of the frame region.

11. A fuel cell stack assembly, comprising:
a membrane electrode unit which is connected at least on one side with the conductive side of a plate element according to one of the Claims 1 to 4 and 6 to 10.

## Revendications

1. Élément de plaque (10) pour empilement de pile à combustible à agencement unipolaire, comprenant :
une zone de cadre (11) et au moins une zone interne entourée par la zone de cadre (11) ;
une pluralité de barrettes (13) qui s'étendent à partir de la zone de cadre (11) dans l'au moins une zone interne et définissent, dans au moins une zone interne, une structure de guidage d'écoulement (14) constituée par des évidements entre les barrettes (13),
au moins quatre perçages (15, 16, 17, 18) dans la zone de cadre, dont au moins deux sont reliés à la structure de guidage d'écoulement (14) ;
**caractérisé**
**en ce que** les évidements comportent au moins un canal pour guider un écoulement de fluide dans le plan de la plaque, de telle sorte que des zones de fluide au sein de paires d'anodes de l'empilement de pile à combustible ne sont pas séparées et que des zones de fluide au sein de paires de cathodes de l'empilement de pile à combustible ne sont pas séparées, et
**en ce que** la structure de guidage d'écoulement (14) comporte des délimitations latérales constituées par des surfaces planes adjacentes d'éléments de pile successifs.

2. Élément de plaque selon la revendication 1, dans lequel la structure de guidage d'écoulement comporte au moins un canal d'écoulement sinueux.

3. Élément de plaque selon l'une des revendications 1 et 2, constitué par un matériau conducteur.

4. Élément de plaque selon la revendication 3, constitué par un métal ou un composé métallique.

5. Élément de plaque selon l'une des revendications 1 et 2, constitué par un matériau isolant.

6. Élément de plaque selon l'une des revendications 1 et 2, constitué par un matériau laminé comportant une couche conductrice et une couche isolante.

7. Élément de plaque selon l'une des revendications 1 et 2, constitué par un matériau laminé comportant une couche isolante, ainsi que deux couches conductrices entre lesquelles la couche isolante est incluse.

8. Élément de plaque selon l'une des revendications précédentes, comportant au moins une nervure qui s'étend vers l'extérieur à partir de la zone de cadre.

9. Élément de plaque selon la revendication 8, comportant des nervures sur au moins deux côtés opposés de la zone de cadre.

10. Élément de plaque selon la revendication 9, dans lequel les nervures présentes sur des côtés opposés de la zone de cadre sont décalées les unes par rapport aux autres.

11. Unité d'empilement de pile à combustible, comprenant :
une unité d'électrodes à membrane qui est connectée au moins d'un côté au côté conducteur d'un élément de plaque selon l'une des revendications 1 à 4 et 6 à 10.
